(19) Europäisches Patentamt

European Patent Office

Office européen des brevets

(11) Veröffentlichungsnummer: **0 427 701 B1**

(12) **EUROPÄISCHE PATENTSCHRIFT**

(45) Veröffentlichungstag der Patentschrift: **30.11.94**

(51) Int. Cl.5: **D01F 13/02**, B01J 41/04

(21) Anmeldenummer: **90890276.0**

(22) Anmeldetag: **11.10.90**

(54) **Verfahren zur Reinigung wässeriger Lösungen von N-Methylmorpholin-N-oxid.**

(30) Priorität: **16.10.89 AT 2373/89**

(43) Veröffentlichungstag der Anmeldung:
**15.05.91 Patentblatt 91/20**

(45) Bekanntmachung des Hinweises auf die
Patenterteilung:
**30.11.94 Patentblatt 94/48**

(84) Benannte Vertragsstaaten:
**AT BE CH DE DK ES FR GB GR IT LI LU NL SE**

(56) Entgegenhaltungen:
**DD-A- 254 199**

(73) Patentinhaber: **Lenzing Aktiengesellschaft**

**A-4860 Lenzing (AT)**

(72) Erfinder: **Korger, Dietmar**

**A-4853 Steinbach am Attersee 2a (AT)**
Erfinder: **Eichinger, Dieter, Dipl.-Ing. Dr.**
**Oberstadtgries 5/17**
**A-4840 Vöcklabruck (AT)**
Erfinder: **Astegger, Stephan, Mag. Dr.**
**Feldgasse 14**
**A-4840 Vöcklabruck (AT)**
Erfinder: **Weinzierl, Karin, Dipl.-Ing.**
**Ausserungenach 2**
**A-4850 Timelkam (AT)**
Erfinder: **Männer, Johann**

**A-4852 Weyregg 145 (AT)**

(74) Vertreter: **Katschinka, Werner**
**Patentanwälte Dr. Erwin Müllner**
**Dipl.-Ing. Werner Katschinka**
**Dr. Martin Müllner**
**Weihburggasse 9**
**A-1014 Wien (AT)**

**Beschreibung**

Die Erfindung betrifft ein Verfahren zur Reinigung wässeriger Lösungen von N-Methylmorpholin-N-oxid (NMMO), insbesondere von Spinnbadlösungen, die bei der Herstellung cellulosischer Produkte anfallen, bei welchem Verfahren die zu reinigenden Lösungen mit einem Anionenaustauscher in Kontakt gebracht und die gereinigten Lösungen vom Anionenaustauscher abgetrennt werden.

Es ist bekannt, Cellulose in wässerigen NMMO-Lösungen einzubringen und spinnfähige homogene Cellulose-Lösungen herzustellen. Durch Ausfällen dieser Lösungen in Wasser werden Folien, Fäden oder Formteile auf Cellulosebasis erhalten, also Gegenstände, die heute in großem Umfang nach dem Viskoseverfahren hergestellt werden. Spinnfähige Lösungen von Cellulose in wässerigem NMMO haben aber bezüglich Umweltverträglichkeit gegenüber der Viskose einen entscheidenden Vorteil: Während beim Aminoxidverfahren das NMMO aus dem Spinnbad wiedergewonnen und wiederverwendet werden kann, entsteht beim Viskoseverfahren $H_2S$, $COS,CS_2$ und kolloidaler Schwefel. Diese Stoffe können nicht recycliert, sondern müssen aufwendig entsorgt werden.

Um das NMMO, das in einem gebrauchten Spinnbad enthalten ist, zur neuerlichen Herstellung von spinnfähigen Cellulose-Lösungen verwenden zu können, muß die Spinnbadlösung gereinigt und aufkonzentriert werden. Wird eine Reinigung nicht vorgenommen, so kommt es bereits nach wenigen NMMO-Kreisläufen zu einer dunkelbraunen Verfärbung der Cellulose-Lösungen. Es bilden sich vor allem pigmentartige anionische Verbindungen aus mehrwertigen Phenolen, aus Abbauprodukten der Cellulose selbst und aus NMMO-Stabilisatoren, die der Lösung üblicherweise beigegeben werden müssen. Als wirksamer Stabilisator ist Gallussäurepropylester bekannt. Dieser hat allerdings die Eigenschaft, mit Eisen einen stabilen anionischen Komplex zu bilden, so daß es ohne Reinigung unweigerlich zur Anreicherung von Eisen im mehrmals verwendeten Lösungsmittel kommt.

Alle diese Verunreinigungen würden sich bei einer geschlossenen Lösungsmittelführung unweigerlich anreichern und die Eigenschaften der Endprodukte nach dem Spinnprozeß nachteilig beeinflussen, so daß z.B. Fasern u.a. nicht mehr bleichbar sind.

Ein Verfahren zur Reinigung von wässerigen NMMO-Lösungen ist aus der DD-A - 254 199 bekannt. Danach werden 5 bis 60 % Masse NMMO enthaltende wässerige Lösungen durch mit Styrol-Divinylbenzol-Copolymerisat gefüllte Austauschersäulen geleitet. Diese enthalten in der ersten Stufe als funktionelle Gruppen tertiäre Aminogruppen vom Typ-$CH_2$-$N(CH_3)_2$ und in der zweiten Stufe quartäre Ammoniumgrup-pen vom Typ-$CH_2$-$[N(CH_3)_3]OH$.

Ein Nachteil bei der großtechnischen Führung des genannten Verfahrens besteht darin, daß es zweistufig ausgelegt werden muß. Weiters muß der in der zweiten Stufe verwendete stark basische Anionenaustauscher mit einer wässerigen Lösung, enthaltend 3 % Masse NaOH und 10 % Masse NaCl, regeneriert werden. Die gebrauchte Regenerierflüssigkeit schafft ein Abwasser- und Deponieproblem.

Die Erfindung stellt sich die Aufgabe, das Verfahren zur Reinigung wässeriger NMMO-Lösungen, wie sie insbesondere bei der Celluloseherstellung im Spinnbad anfallen, so zu verbessern, daß es die oben genannten Nachteile nicht mehr aufweist.

Diese Aufgabe wird bei einem Verfahren der eingangs genannten Art erfindungsgemäß so gelöst, daß die Reinigung in einem einstufigen Verfahren mit einem Anionenaustauscher durchgeführt wird, der als funktionelle Gruppen ausschließlich quartäre Tetraalkylammoniumgruppen der Formeln

$-CH_2-N^{\oplus}(CH_3)_3 X^{\ominus}$ oder $-CH_2-N^{\oplus}[(CH_3)_2(CH_2OH)]X^{\ominus}$

aufweist, worin $X^{\ominus}$ das Anion einer anorganischen oder organischen Säure darstellt, worauf der Anionenaustauscher mit einer wässerigen sauren Lösung regeneriert wird.

Es hat sich gezeigt, daß sich die erfindungsgemäß gereinigten NMMO-Lösungen - nach Aufkonzentrieren - sehr gut zur Herstellung von neuen spinnfähigen Celluloselösungen eignen und daß es trotz der Verwendung nur eines einzigen Anionenaustauschers zu keiner Anreicherung von unerwünschten Substanzen im Lösungsmittelkreislauf kommt.

Beim erfindungsgemäß verwendeten Anionenaustauscher kommt es auch zu keiner Absorption von NMMO, so daß die Reinigung mit keinen NMMO-Verlusten verbunden ist.

Das erfindungsgemäße Verfahren wird durchgeführt, indem die zu reinigende Lösung durch eine mit dem oben genannten Anionenaustauscher gefüllte Säule geleitet wird. Dabei werden die anionischen Verunreinigungen vom Austauscher gebunden, so daß eine gereinigte NMMO-Lösung aus der Säule austritt. Das letzte Bettvolumen, das in der Säule verbleibt, muß ausgewaschen werden. Nach destillativem Aufkonzentrieren der wässerigen NMMO-Lösung kann das erhaltene Konzentrat direkt zur Herstellung neuer spinnfähiger Cellulose-Lösungen verwendet werden.

Die am Anionenaustauscher gebundenen Verunreinigungen können auf einfache Weise mit einer wässerigen sauren Lösung eluiert und aus dem NMMO-Kreislauf ausgeschieden werden. Dabei wird der Anionenaustauscher gleichzeitig wieder regeneriert.

Eine vorteilhafte Ausführungsform des erfindungsgemäßen Verfahrens besteht darin, daß ein Anionenaustauscher eingesetzt wird, dessen Anion $X^{\ominus}$ von einer flüchtigen Säure, insbesondere von Kohlensäure, Ameisensäure oder Essigsäure, abgeleitet ist. Durch die Verwendung einer flüchtigen Säure kann die Entsorgung der Regeneriersäure durch Verbrennung einfach gestaltet werden. Ameisensäure und Essigsäure können durch Destillation aber auch rückgewonnen werden.

Weiters hat sich als günstig erwiesen, wenn die Regenerierungssäure noch zusätzlich bis zu 5 % Masse einer Hydroxicarbonsäure, insbesondere Weinsäure, enthält. Dadurch wird die Eluierung des Eisen-Stabilisator-Komplexesbei der Regeneration des Anionenaustauschers begünstigt.

Das erfindungsgemäße Verfahren eignet sich insbesondere zur Reinigung wässeriger NMMO-Lösungen mit einem NMMO-Gehalt bis zu 65 % Masse.

Die Erfindung wird durch die nachfolgenden Beispiele noch näher erläutert.

Der Gehalt an Verunreinigungen in den NMMO-Lösungen wurde absorptionsspektroskopisch bestimmt, wobei aus den Extinktionswerten bei 260 nm, 300 nm und 400 nm jeweils ein Extinktionsfaktor nach folgender Formel berechnet wurde:

$$\text{Extinktionsfaktor} = \frac{\text{Extinktion x 1000}}{\text{\% Masse NMMO}}$$

Je höher der Extinktionsfaktor, desto verunreinigter ist die Lösung. Die erfindungsgemäß erreichte Reinigung kann somit am Vergleich der Extinktionsfaktoren vor und nach der Reinigung abgelesen werden.

Beispiel 1:

Die zu reinigende Spinnbadlösung enthielt 20 Gew.% NMMO und wies die in der Tabelle 1 ersichtlichen Extinktionsfaktoren auf. Zur Reinigung wurden 1063 ml des Anionenaustauschers Lewatit MP-500 (funktionelle Gruppe: $-CH_2-N^{\oplus}(CH_3)_3$) in der Formiat-Form mit 37.200 ml der Spinnbadlösung behandelt, um das Austauscherharz mit den Verunreinigungen zu beladen. Die zu reinigende Spinnbadlösung enthielt 28 ppm Eisen.

Danach wurde die im Harz verbliebene gereinigte Spinnbadlösung mit 4.252 ml Wasser aus dem Harz ausgewaschen. Wie an den Extinktionsfaktoren der eluierten Lösung ablesbar (Tabelle 1), wurde ein Großteil der Verunreinigungen vom Austauscherharz zurückgehalten. Der Fe-Gehalt betrug nur mehr 4 ppm.

Die gereinigte verdünnte Lösung wurde destillativ auf einen NMMO-Gehalt von 60 Gew.% aufkonzentriert und konnte ohne weitere Reinigung direkt zur Herstellung spinnfähiger Celluloselösungen verwendet werden.

Zur Regenerierung des Anionenaustauschers wurden die Verunreinigungen mit einer wässerigen Lösung, enthaltend 10 Gew.% Ameisensäure und 0,2 Gew.% Weinsäure, eluiert.

Tabelle 1

|  | Gew.% NMMO | Extinktionsfaktoren bei | | |
|---|---|---|---|---|
|  |  | 260 nm | 300 nm | 400 nm |
| Spinnbad | 20 | 0,290 | 0,219 | 0,016 |
| gereinigte Lösung | 18 | 0,098 | 0,087 | 0,001 |

Beispiel 2:

Ausführung analog Beispiel 1, wobei aber als Anionenaustauscher DOWEX-D-1 (Hersteller: Fa. Dow Chemical; funktionelle Gruppe: $-CH_2-N^{\oplus}(CH_3)_3$) in der Formiat-Form eingesetzt wurde.

Extinktionsfaktoren der ausgewaschenen Lösung:

EP 0 427 701 B1

| nm | Extinktionsfaktor |
|-----|---|
| 260 | 0,109 |
| 300 | 0,097 |
| 400 | 0,001 |

Beispiel 3:

500 ml des Anionenaustauschers Lewatit MP-500 wurden in der Formiat-Form mit 6000 ml einer 62 Gew.%igen wässerigen NMMO-Lösung (Tabelle 2) behandelt, wobei die Verunreinigungen vom Austauscherharz zurückgehalten wurden.

Danach wurde die zuletzt im Harz verbliebene gereinigte Lösung mit 4000 ml Wasser aus dem Harz ausgewaschen und zur Herstellung spinnfähiger Celluloselösungen wiederverwendet. Zur Regenerierung des Anionenaustauschers wurden die Verunreinigungen mit einer wässerigen 10 Gew.%igen Ameisensäurelösung eluiert.

Tabelle 2

|  | Gew.% NMMO | Extinktionsfaktoren bei | | |
|---|---|---|---|---|
|  |  | 340 nm | 400 nm | 450 nm |
| zu reinigende NMMO-Lösung | 62 | 1,366 | 0,555 | 0,32 |
| gereinigte Lösung | 43 | 0,404 | 0,109 | 0,07 |

Beispiel 4:

Ausführung analog Beispiel 3, wobei aber als Anionenaustauscher DOWEX-D-1 in der Formiat-Form eingesetzt wurde.

Extinktionsfaktoren der ausgewaschenen Lösung:

| nm | Extinktionsfaktor |
|-----|---|
| 340 | 0,216 |
| 400 | 0,085 |
| 450 | 0,051 |

**Patentansprüche**

**1.** Verfahren zur Reinigung wässeriger Lösungen von N-Methylmorpholin-N-oxid (NMMO), insbesondere von Spinnbadlösungen, die bei der Herstellung cellulosischer Produkte anfallen, bei welchem Verfahren die zu reinigenden Lösungen mit einem Anionenaustauscher in Kontakt gebracht und die gereinigten Lösungen vom Anionenaustauscher abgetrennt werden, dadurch gekennzeichnet, daß die Reinigung in einem einstufigen Verfahren mit einem Anionenaustauscher durchgeführt wird, der als funktionelle Gruppen ausschließlich quartäre Tetraalkylammoniumgruppen der Formeln

$-CH_2-N^{\oplus}(CH_3)_3 X^{\ominus}$ oder $-CH_2-N^{\oplus}[(CH_3)_2(CH_2OH)]X^{\ominus}$

aufweist, worin $X^{\ominus}$ das Anion einer anorganischen oder organischen Säure darstellt, worauf der Anionenaustauscher mit einer wässerigen sauren Lösung regeneriert wird.

4

**2.** Verfahren nach Anspruch 1, dadurch gekennzeichnet, daß ein Anionenaustauscher eingesetzt wird, dessen Anion $X^\ominus$ von einer flüchtigen Säure, insbesondere von Kohlensäure, Ameisensäure oder Essigsäure, abgeleitet ist.

**3.** Verfahren nach einem der Ansprüche 1 oder 2, dadurch gekennzeichnet, daß die Regenerierung des Anionenaustauschers mit einer wässerigen Lösung von Ameisensäure, Essigsäure oder Kohlensäure durchgeführt wird, welche Lösung weiten bis zu 5 % Masse einer Hydroxicarbonsäure, insbesondere Weinsäure, enthält.

**4.** Verfahren zur Reinigung wässeriger NMMO-Lösungen nach einem der Ansprüche 1 bis 3, welche Lösungen bis zu 65 % Masse NMMO enthalten.

**Claims**

**1.** A method for the purification of aqueous solutions of N-methylymorpholine-N-oxide (NMMO), particularly of spinning bath solutions, which occur during the manufacture of cellulose products, in which method the solutions to be purified are brought into contact with an anion exchanger and the purified solutions are separated from the anion exchanger, characterised in that the purification is carried out in a one-stage method with an anion exchanger which has as functional groups exclusively quarternary tetraalkylammonium groups of the formula

$$-CH_2-N^\oplus(CH_3)_3 X^\ominus \text{ or } -CH_2-N^\oplus[(CH_3)_2(CH_2OH)]X^\ominus$$

wherein $X^\ominus$ represents the anion of an inorganic or organic acid, at which the anion exchanger is regenerated with an aqueous acid solution.

**2.** A method according to claim 1, characterised in that an anion exchanger is used, the anion $X^\ominus$ of which is derived from a volatile acid, particularly from carbonic acid, formic acid or acetic acid.

**3.** A method according to claim 1 or 2, characterised in that the regeneration of the anion exchanger is carried out with an aqueous solution of formic acid, acetic acid or carbonic acid, which solution additionally contains up to 5% by mass of a hydroxycarbon acid, particularly tartaric acid.

**4.** A method for the purification of NMMO solutions according to one of claims 1 to 3, which solutions contain up to 65% by mass NMMO.

**Revendications**

**1.** Procédé de purification de solutions aqueuses d'oxyde de N-méthylmorpholine-N (NMMO), en particulier de de solutions bains de filage, mis en oeuvre lors de la préparation de produits cellulosiques, au cours duquel procédé les solutions à purifier sont mises en contact avec un échangeur anionique et les solutions purifiées sont séparées de l'échangeur anionique, caractérisé en ce que la purification est mise en oeuvre dans un procédé en une étape avec un échangeur anionique, qui comporte en tant que groupes fonctionnels exclusivement des groupes quaternaires de tétraalkylammonium de formule:

$$-CH_2-N^\oplus(CH_3)_3 X^\ominus \text{ oder } -CH_2-N^\oplus[(CH_3)_2(CH_2OH)]X^\ominus$$

dans laquelle
$X^-$ représente l'anion d'un acide organique ou inorganique, de manière que l'échangeur anionique soit régénéré avec une solution aqueuse acide.

**2.** Procédé selon la revendication 1, caractérisé en ce que l'on utilise un échangeur anionique, dont l'anion $X^-$ est éliminé par un acide volatil, en particulier par l'acide carbonique, l'acide formique ou l'acide acétique.

**3.** Procédé selon l'une des revendications 1 ou 2, caractérisé en ce que la régénération de l'échangeur anionique est réalisée avec une solution aqueuse d'acide formique, d'acide acétique ou d'acide carbonique, ladite solution contenant en outre jusqu'à 5% en masse d'un acide hydroxycarboxylique, en particulier d'acide tartrique.

4. Procédé de purification de solutions aqueuses de NMMO selon l'une des revendications 1 à 3, lesquelles solutions contiennent jusqu'à 65% en masse de NMMO.